Europäisches Patentamt

European Patent Office

Office européen des brevets

(19)

(11) Veröffentlichungsnummer: **0 236 834**

**A2**

(12) **EUROPÄISCHE PATENTANMELDUNG**

(21) Anmeldenummer: 87102572.2

(22) Anmeldetag: 24.02.87

(51) Int. Cl.⁴: **C08L 81/02 , C08K 5/37**

(30) Priorität: 08.03.86 DE 3607713

(43) Veröffentlichungstag der Anmeldung:
16.09.87 Patentblatt 87/38

(84) Benannte Vertragsstaaten:
BE DE ES FR GB IT

(71) Anmelder: **BAYER AG**
**Konzernverwaltung RP Patentabteilung**
**D-5090 Leverkusen 1 Bayerwerk(DE)**

(72) Erfinder: **Bier, Peter, Dr.**
**Mobay Corporation Mobay Road**
**Pittsburgh, PA 15205(US)**
Erfinder: **Reinking, Klaus, Dr.**
**Robert-Stolz-Strasse 16b**
**D-5632 Wermelskirchen 1(DE)**
Erfinder: **Bottenbruch, Ludwig, Dr.**
**Wöhlerstrasse 5**
**D-4150 Krefeld 1(DE)**
Erfinder: **Tresper, Erhard, Dr.**
**Moerser Strasse 394**
**D-4150 Krefeld(DE)**

(54) **Schnellkristallisierende Polyphenylensulfidmassen.**

(57) Die Erfindung betrifft hochkristalline, schnellkristallisierende, thermoplastische Massen aus Polyphenylensulfiden und Thioethern.

EP 0 236 834 A2

## Schnellkristallisierende Polyphenylensulfidmassen

Die Erfindung betrifft hochkristalline, schnellkristallisierende, thermoplastische Massen aus Polyphenylensulfiden und Thioethern.

Polyphenylensulfide können als Rohstoffe für die Herstellung von Fasern, Folien und Formkörpern verwendet werden. Aufgrund ihrer teilkristallinen Struktur besitzen sie hervorragende Eigenschaften, z.B. hohe Verschleißfestigket, günstiges Zeitstandverhalten und hohe Maßgenauigkeit. Sie sind daher für die Herstellung mechanisch und thermisch stark beanspruchter Teile gut geeignet.

Eine zusätzliche Verbesserung der mechanischen Eigenschaften läßt sich z.B. durch Einarbeitung von Verstärkungsmaterialien wie Glasfasern erzielen.

Die Herstellung von Formkörpern aus Polyphenylensulfid durch Spritzguß ist jedoch erschwert, da hohe Formtemperaturen (>130°C) und relativ lange Preßzeiten notwendig sind. Werkzeugtemperaturen >130°C und mehr können bei den meisten Spritzgußverarbeitern nicht praktiziert werden, da die Werkzeuge im Normalfall für eine Temperatur um 100°C (Heizmittel Wasser) ausgelegt sind. Werkzeugeinrichtungen, die mit anderen Heizmitteln, z.B. Öl betrieben werden und Temperaturen >110°C erzielen, sind im allgemeinen selten und ihr Gebrauch ist unbequem. Sehr häufig werden auch damit in der Praxis die gewünschten Temperaturen nicht erzielt, und die Temperaturverteilung ist ungleichmäßig. Wegen dieser Nachteile kann es wirtschaftlich unattraktiv sein solche hohe Werkzeugtemperaturen im Spritzgußbereich anzuwenden.

Weiterhin ist es wünschenswert hohe Kristallinität möglichst rasch zu erreichen um ein optimales Eigenschaftniveau zu erhalten. Hohe Kristallinität gewährleistet Härte, Dimensionsstabilität und Formstabilität, auch bei höheren Temperaturen. Außerdem hängt von der Formstandzeit die Dauer des Spritzzyklus ab, welche die Wirtschaftlichkeit mitbestimmt.

Diese Zyklen sind selbst bei den hohen Werkzeugtemperaturen für die Verarbeitung des Polyphenylensulfids relativ lang und . erschweren das Vordringen von Polyphenylensulfid bei der Herstellung von Spritzgußformkörpern.

Es wurde nun gefunden, daß Polyphenylensulfide dann höhere Kristallinität besitzen und schneller kristallisieren wenn sie 0,5 -30 Gew.-%, bezogen auf Polyphenylensulfid Thioether enthalten. Dies ermöglicht es, den für die hohe Formstabilität erforderlichen Kristallinitätsgrad schneller zu erreichen und damit die Polyphenylensulfidmassen mit stark verkürzten Spritzzyklen zu verarbeiten.

Ein weiterer Vorteil der erfindungsgemäßen Polyphenylensulfidmassen besteht in der Absenkung der Formtemperatur, ohne daß das gute Kristallisationsverhalten beeinträchtigt wird. Die Spritzgußmasse kühlt - schneller ab, wodurch die Formstandzeit weiter abgekürzt wird.

Gegenstand der Erfindung sind hochkristalline, schnell kristallisierende thermoplastiche Massen, bestehend aus:

a) 70 -99,5 vorzugsweise 90 -98,5, besonders bevorzugt 93 -97 Gew.-% eines Polyphenylensulfids mit einer Schmelzviskosität von mindestens 5 Pas, vorzugsweise von mindestens 50 Pas bis 1200 Pas, - (gemessen bei 306°C und einer Schubspannung von $10^3$ Pa) und

b) 0,5 -30, vorzugsweise 1,5 -10, besonders bevorzugt 3 -7 Gew.-%, bezogen auf a) und b), eines Thioethers.

Ein weiterer Gegenstand der vorliegenden Erfindung ist ein Verfahren zur Herstellung hochkristalliner, - schnellkristallisierender, thermoplastischer Massen, das dadurch gekennzeichnet ist, daß man 70-99,5, vorzugsweise 90-98,5, besonders bevorzugt 93-97 Gew.-% eines Polyphenylensulfids mit einer Schmelzviskosität von mindestens 5 Pas, vorzugsweise von mindestens 50 Pas bis 1200 Pas (306°C, $10^3$ Pa) und 0,5-30, vorzugsweise 1,5-10, besonders bevorzugt 3 bis 7 Gew.-% eines Thioethers, mischt, indem man den Thioether der Polyphenylensulfidschmelze hinzufügt und in der Schmelze homogenisiert.

Die erfindungsgemäßen Polyphenylensulfidmassen sind thermoplastisch verarbeitbar und können zum Spritzgießen verwendet werden. Bei der Verarbeitung zum Spritzguß kann eine Mischung aus einem Polyphenylensulfid mit einer Schmelzviskosität von mindestens 5 Pas, vorzugsweise von mindestens 50 Pas bis 1200 Pas (gemessen bei 306°C bei einer Schubspannung von $10^3$ Pa) und einem Thioether in Formen gegossen werden, die eine Temperatur von nicht mehr als 120°C aufweisen, wobei die Menge an Thioether so gewählt wird, daß das spritzgegossene Polyphenylensulfid mindestens 70 % der Kristallinität aufweist, die man beim Verspritzen eines Formteils aus unmodifizierten Polyphenylensulfid bei Werkzeugtemperaturen von mindestens 130°C erreicht. Als Maß fürdie Kristallinität kann z.B. die mit einer DSC-Apparatur bestimmbare Schmelzwärme herangezogen werden.

Polyarylensulfide lassen sich auf bekannte Weise aus Dihalogenaromaten und Alkalisulfiden in Lösung herstellen. (z. B. US-PS 2 513 188).

Unter Thioethern werden im Sinne der Erfindung Verbindungen verstanden, die eine oder mehrere -S-Gruppen enthalten. Eine Zusammenstellung derartiger Produkte und deren Herstellverfahren ist z. B. in Dr. Kurt Thinius: Chemie, Physik und Technologie der Weichmacher, VEB Verlag Technik, Berlin 1960 auf Seiten 482 bis 502 zu finden.

Erfindungsgemäß verwendbare Thioether sind Verbindungen der Thioglykolsäure und/oder des Thiodiglykols der Formeln (I) und (II):

$R_2[O-\overset{O}{\underset{C}{\parallel}}-CH_2-S-(R_1-S)_x-CH_2-\overset{O}{\underset{C}{\parallel}}-O]R_2$ (I),

$R_2[O-CH_2CH_2-(S-CH_2CH_2)_yO]R_2$ (II),

in welchen,

$R_1$ für einen zweiwertigen $C_1$-$C_{10}$-aliphatischen, $C_5$-$C_{12}$-cycloaliphatischen, $C_7$-$C_{24}$-araliphatischen oder $C_6$-$C_{24}$-aromatischen Rest steht,

$R_2$ für gleiche oder unterschiedliche $C_1$-$C_{10}$-Alkyl-, $C_5$-$C_{12}$-Cycloalkyl-, $C_7$-$C_{12}$-Aralkyl-, $C_6$-$C_{24}$-Aryl-Reste, die gegenüber Polyphenylensulfid unter Spritzgußbedingungen im wesentlichen inert sind, steht,

x für die Zahl 0 oder 1 steht und

y für eine ganze Zahl von 1 bis 50 steht.

Beispiele für die erfindungsgemäßen Thioether sind: Methylen-bis-thioglykolsäurebutylester, Di-2-ethylhexylthiodiglykolat, ethoxyliertes Thiodiglykol, Polythiodiglykol.

Die Herstellung der Mischung von Polyphenylensulfiden und Thioethern kann auf handelsüblichen Mischgeräten durchgeführt werden. Als solche eignen sich Kneter, Einwellen-und Zweiwellenextruder. Für die weitere Verarbeitung kann die erhaltene Mischung nach dem Erstarren der Schmelze granuliert werden.

Die Polyphenylensulfidzusammensetzungen können zusätzlich Füll-und/oder Verstärkungsstoffe in Form von Pulvern, Fasern oder Matten enthalten. Beispiele dafür sind Metalle wie Stahl, Kupfer, Aluminium oder Kohlenstoff. Bevorzugte Füllstoffe sind Quarz, Talk oder Kaolin, bevorzugte Verstärkungsstoffe sind Glasfasern.

Weiterhin können die Massen gegebenenfalls anorganische Pigmente, wie z.B. $TiO_2$, ZnS, Phthalocyanine, Ruß, Cd-Pigmente, Spinelle oder organische Farbstoffe, Fließhilfsmitel, Entformungsmittel, UV-Absorber und/oder Stabilisatoren enthalten.

Um die Flammfestigkeit der Produkte weiter zu erhöhen können sie zusätzlich übliche flammhindernde Additive enthalten wie z.B. solche die Halogen, Phosphor, PhosphorStickstoff, gegebenenfalls in Kombination mit Oxiden der Elemente der V Nebengruppe wie z.B. Antimonoxid, enthalten.

Die Kristallisationsgeschwindigkeit der Polyphenylensulfidmassen kann durch Zusatz von anorganischen oder organischen Keimbildungsmitteln weiter erhöht werden. Dies wird bei den Spritzgußmassen standardmäßig durchgeführt.

Die Mengen betragen 0,05 bis 5, vorzugsweise 0,1 und 1 Gew.-%. Bevorzugtes Keimbildungsmittel ist Mikrotalk.

Die erfindungsgemäßen Poylphenylensulfidmasen sind ausgezeichnete Ausgangsmaterialien für die Herstellung von Folien und Fasern, vorzugsweise für die Herstellung von Formkörpern aller Art durch Spritzguß.

Beispiele

Die erfindungsgemäßen Polyphenylensulfidmassen wurden durch Mischen und Homogenisieren der Basiskomponenten (siehe Tabelle 1) mit einem 30 mm Werner und Pfleiderer Doppelwellenextruder bei einer Schmelzetemperatur von 310°C hergestellt. Die zu Granulat zerhackten Stränge wurden über Nacht getrocknet.

Am getrockneten Granulat wurde die isotherme Kristallisationsgeswindigkeit mit Hilfe einer DSC-Apparatur bestimmt. Vorbehandlung der Proben: Aufgeheizt bis 330°C, 1 min auf Temperatur gehalten und in flüssigem Stickstoff abgeschreckt. Die amorphen Proben wurden in der DSC-Apparatur bei 110°C isotherm auskristallisieren lassen, wobei die Änderung der Kristallisationswärme in Abhängigkeit der Zeit registriert wurde (exothermer Peak).

Als Maß für die Kristallisationsgeschwindigkeit ist die Zeit bis zum Erreichen des Maximums in Tabelle 1 als Halbwertszeit eingetragen.

Die in Tabelle 1 aufgeführten erfindungsgemäßen Proben 1-4 bestehen aus einem Polyphenylensulfid mit einer Schmelzviskosität von 108 Pas (gemessen bis 306°C und einer Schubspannung von 1000 Pa), 3,5 Gew.-% eines Thioethers, 40 Gew.-% Glasfasern und 5 Gew.-% Mikrotalk. Beispiel 5 ist eine entsprechende Polyphenylensulfidprobe ohne Thioether zum Vergleich.

0 236 834

<u>T a b e l l e   1</u>

| Beispiel | Thioether | Isotherme ($110^\circ$ C) Kristallisations-geschwindigkeit Halbwertszeit [s] |
|---|---|---|
| 1 | Methylen-bis-thioglykolsäurebutylester | 16 |

$$H_2C \begin{array}{l} \diagup S-CH_2-\overset{\displaystyle O}{\overset{\displaystyle \|}{C}}O-C_4H_9 \\ \diagdown S-CH_2-\underset{\displaystyle \|}{\underset{\displaystyle O}{C}}O-C_4H_9 \end{array}$$

| | | |
|---|---|---|
| 2 | Di-2-ethylhexylthiodiglykolat | 15 |

$$S \begin{array}{l} \diagup CH_2-\overset{\displaystyle O}{\overset{\displaystyle \|}{C}}O-C_8H_{17} \\ \diagdown CH_2-\underset{\displaystyle \|}{\underset{\displaystyle O}{C}}O-C_8H_{17} \end{array}$$

| | | |
|---|---|---|
| 3 | Ethoxyliertes Thiodiglykol mit Butyl- und i-Octyl-Endgruppen | 12 |

$$S \begin{array}{l} \diagup CH_2-CH_2-OCH_2-\overset{\displaystyle C_2H_5}{\overset{\displaystyle |}{C}}H-CH_2-CH_2-CH_2-CH_3 \\ \diagdown CH_2-CH_2-O(CH_2-CH_2-O)_n-C_4H_9 \end{array}$$

$$n = 2 - 8$$

0 236 834

## T a b e l l e  1  (Fortsetzung)

| Beispiel | Thioether | Isotherme ($110^0$ C) Kristallisations-geschwindigkeit Halbwertszeit [s] |
|---|---|---|
| 4 | Ethoxyliertes Thiodiglykol mit Butylendgruppen | 5 |
| | $C_4H_9-(OCH_2CH_2)_n-OC_2H_4-S-C_2H_4--O-(CH_2CH_2O)_n-C_4H_9$ $n = 1 - 4$ | |
| 5 | -- | 43 |

## Ansprüche

1. Hochkristalline, schnellkristallisierende, thermoplastische Massen bestehend aus

a) 70 -99,5 Gew.-% eines Polyphenylensulfids, mit einer Schmelzviskosität von mindestens 5 Pas - (gemessen bei 306°C und bei einer Schubspannung von $10^3$ Pa) und

b) 0,5 -30 Gew.-% bezogen auf a) und b) eines Thioethers.

2. Verfahren zur Herstellung von Massen nach Anspruch 1, dadurch gekennzeichnet, daß man 70-99,5 Gew.-%, eines Polyphenylensulfids mit einer Schmelzviskosität von mindestens 5 Pas (gemessen bei 306°C und einer Schubspannung von $10^3$ Pa) und 0,5-30 Gew.-% eines Thioethers mischt, indem man den Thioether der Polyphenylensulfidschmelze hinzufügt und in der Schmelze homogenisiert.

3. Verfahren zur Herstellung von Spritzgußkörpern aus Massen nach Anspruch 1, dadurch gekennzeichnet, daß man eine Mischung aus einem Polyphenylensulfid mit einer Schmelzviskosität von mindestens 5 Pas (gemessen bei 306°C und einer Schubspannung von $10^3$ Pa) und einem Thioether in formen gießt, die eine Temperatur von nicht mehr als 120°C aufweisen, wobei die Menge an Thioether so gewählt ist, daß das spritzgegossene Polyphenylensulfid mindestens 70 % der Kristallinität aufweist, die man beim Verspritzen eines Formteils aus unmodifiziertem Polyphenylensulfid bei Werkzeugtemperaturen von mindestens 130°C erreicht.